# NOUVEAU FASCICULE DE BREVET EUROPEEN

(11) **EP 3 172 175 B2**
(45) Date de publication et mention de la décision concernant l'opposition: **25.03.2026**
(45) Mention de la délivrance du brevet: 11.01.2023
(21) Numéro de dépôt: 15736295.5
(22) Date de dépôt: 15.07.2015
(51) Int. Cl.: C03C 17/36

(54) **PANNEAU DE VERRE DÉCORATIF**
ZIERGLASSCHEIBE
DECORATIVE GLASS PANEL

(30) Priorité: 25.07.2014 EP 14178596
(43) Date de publication de la demande: 31.05.2017
(73) Titulaire: AGC Glass Europe, 1348 Louvain-la-Neuve (BE)
(72) Inventeur: DUMONT, Jacques, B-5537 Bioul (BE); DEPAUW, Jean-Michel, B-1083 Bruxelles (BE)
(74) Mandataire: AGC Glass Europe
(86) Numéro de dépôt international: PCT/EP2015/066140
(87) Numéro de publication internationale: WO 2016/012325

(56) Documents cités:
- EP-A1- 0 962 429
- EP-A2- 0 833 172
- EP-A2- 2 517 877
- WO-A1-2014/001275
- WO-A1-2014/125081
- WO-A1-2014/125083
- WO-A1-2014/207171
- WO-A2-2012/013787
- WO-A2-2012/013796
- FR-A1- 2 862 961
- JP-A- H10 153 704
- JP-U- S6 455 022
- P. B. Johnson and R. W. Christy. Optical constants of transition metals: Ti, V, Cr, Mn, Fe, Co, Ni, and Pd. Phys. Rev. B 9, 5056- 5070 (1974)
- K. J. Palm, J. B. Murray, T. C. Narayan, J. N. Munday. Dynamic optical properties of metal hydrides. ACS Photonics 5, 4677- 4686 (2018) (Numerical data kindly provided by Kevin Palm
- W. S. M. Werner, K. Glantschnig, C. Ambrosch-Draxl. Optical constants and inelastic electron-scattering data for 17 elemental metals. J. Phys Chem Ref. Data 38, 1013-1092(2009).

## Description

### 1. Domaine de l'invention.

Le domaine de l'invention est celui des panneaux de verre décoratifs, opaques ou à très faible transmission lumineuse, comprenant un substrat en matière vitreuse portant un revêtement décoratif.

Ces panneaux décoratifs ont des applications variées. Ils sont par exemple utilisés en tant qu'allèges (parements de façade) sur la façade d'un bâtiment pour dissimuler les parties murales entre les vitrages de deux étages d'une façade ayant un aspect uniforme du type «tout verre ». Ils sont aussi utilisés pour l'ameublement et la décoration intérieure des bâtiments. Ils peuvent être utilisés aussi pour des displays ou en électroménager. Ils sont utilisés également en automobile, généralement sous forme de bandes, par exemple pour dissimuler de manière esthétique les joints de collage et/ou les collecteurs de courant et les connexions électriques dans les vitrages chauffants tels que les pare-brise chauffants ou les lunettes arrières chauffantes, ou pour dissimuler les connexions électriques et/ou les joints de collage dans les vitrages de toiture avec protection antisolaire.

Ce type de panneau décoratif est en général constitué d'une feuille en matière vitreuse portant un revêtement d'émail décoratif cuit au four. La couche d'émail, sur le produit fini, présente une surface relativement rugueuse et son épaisseur peut être relativement forte. Ceci est désavantageux pour certaines applications et en particulier lorsqu'une fine couche, par exemple une couche conductrice éventuellement chauffante, doit être déposée sur l'émail, et particulièrement si la fine couche conductrice doit déborder du revêtement en émail.

D'autre part, les couches d'émail doivent être cuites en usine après dépôt sur la feuille de matière vitreuse ayant éventuellement également reçu un empilage de couches minces. La cuisson peut être réalisée en deux étapes, avec une première étape de séchage et de stabilisation de l'émail et une seconde étape de durcissement, lors d'un traitement thermique à haute température si celui-ci se fait en usine avant expédition du panneau. La feuille de matière vitreuse revêtue aura souvent subi un traitement thermique de renforcement mécanique à haute température. Ceci peut poser problème pour la découpe du substrat revêtu par la suite. Il est dès lors difficile, voire impossible, de découper la pièce désirée à partir d'un stock de substrat revêtu de grandes dimensions. De plus, lors d'un bris d'une pièce, celle-ci doit être fabriquée de nouveau en usine et ne peut pas être découpée dans un stock de feuilles de grande dimension.

La formation de l'émail nécessite aussi une opération supplémentaire délicate d'émaillage et de cuisson de l'émail qui peut conduire à la formation d'une porosité défavorable notamment pour le vieillissement du panneau.

La présence de l'émail peut aussi induire des problèmes de compatibilité et/ou de réactions chimiques avec d'autres éléments du panneau tels que des empilages mono ou multicouches déposés sur le substrat verrier à diverses fins. L'émail influence également la teinte du panneau décoratif et réduit les possibilités d'obtention de la teinte désirée.

### 2. Solutions de l'art antérieur.

Des solutions ont été trouvées pour éviter la présence de l'émail. La demande de brevet WO 2012/013787 A2 décrit une allège constituée par un empilement de couches formées par pulvérisation cathodique sur un substrat verrier. Ce document fournit des allèges quasiment opaques qui s'adaptent visuellement aux vitrages du bâtiment sans l'utilisation de couche d'émail.

Il y a toutefois une demande pour des panneaux décoratifs procurant un autre effet esthétique.

### 3. Objectifs de l'invention

Un des objets de l'invention est de fournir un panneau décoratif ayant un aspect esthétique nouveau et agréable.

Un autre objet de l'invention est de fournir un panneau décoratif aisé à fabriquer industriellement et ne nécessitant pas d'étape d'émaillage.

Un autre objet de l'invention est de fournir un panneau décoratif résistant et apte à subir un traitement thermique sans modification significative de ses propriétés optiques.

### 4. Exposé de l'invention.

L'invention se rapporte à un panneau de verre à usage décoratif ayant une transmission lumineuse d'au plus 4% comprenant un substrat en matière vitreuse portant un empilage multicouches incluant au moins une couche fonctionnelle absorbant la lumière et des revêtements diélectriques transparents de telle sorte que la couche fonctionnelle absorbant la lumière soit enfermée entre des revêtements diélectriques, caractérisé en ce que la couche fonctionnelle absorbant la lumière a une épaisseur géométrique comprise entre 25 et 88 nm, un coefficient d'extinction k d'au moins 1,8 et un produit du coefficient d'extinction k par l'épaisseur en nm d'au moins 91, en ce que l'empilage multicouches comprend de plus au moins une couche d'atténuation ayant une épaisseur comprise entre 1 et 50 nm et ayant un indice de réfraction n supérieur à 1 et un coefficient d'extinction k d'au moins 0,5, ladite couche d'atténuation étant telle que le produit de son coefficient d'extinction k par son indice de réfraction n et par son épaisseur géométrique exprimée en nm soit supérieur à 35 et en ce qu'un revêtement diélectrique transparent dont l'épaisseur optique est comprise entre 30 et 160 nm et dont l'indice de réfraction n est supérieur à 1,5, sauf s'il est en contact avec l'air, est disposé adjacent à la couche d'atténuation du côté opposé à la couche fonctionnelle absorbant la lumière, au moins les revêtements diélectriques transparents externes par rapport à l'empilage dans son ensemble sont à base de nitrure de silicium ou d'aluminium.

On a trouvé que cette combinaison de caractéristiques avec cette sélection de gammes relativement restreintes d'épaisseurs permet d'obtenir aisément, en choisissant judicieusement les épaisseurs respectives, un nouvel aspect esthétique particulièrement attractif et surprenant. En effet, on peut ainsi aisément obtenir un panneau ayant une très faible réflexion lumineuse, observée du côté de la couche d'atténuation, qui peut atteindre des valeurs aussi faible que par exemple 5% et de plus avec une teinte noire. Ceci fournit un bel effet décoratif.

C'est tout à fait surprenant car les panneaux de l'art antérieur, en particulier ceux fournis par la demande de brevet WO 2012/013787 A2 discutée ci-dessus, procure tous une réflexion lumineuse externe relativement élevée, de l'ordre de 15-25%. En effet, les couches métalliques, et en particulier la couche métallique relativement épaisse qui procure l'opacité du panneau, ont tendance à constituer un effet « miroir » qui réfléchit fortement et de manière spéculaire la lumière. L'invention va totalement à l'encontre de cette situation habituelle et obtient un effet inverse d'absorbeur noir qui fournit un effet esthétique nouveau et particulièrement agréable.

Dans la présente description, sauf avis contraire, la transmission lumineuse T_{L} et la réflexion lumineuse R_{L} sont mesurées avec l'Illuminant D65, 2°. Les coordonnées colorimétriques L^{∗}, a^{∗}, b^{∗}, CIE, sont également mesurées avec l'Illuminant D65, 10°. L'angle sous lequel les mesures sont faites est de 8°.

Par « panneau quasiment opaque » ou « panneau à très faible transmission lumineuse », on veut signifier dans la présente description que la transmission lumineuse au travers du panneau est d'au plus 4%, de préférence d'au plus 2%, avantageusement d'au plus 1%, et même préférentiellement d'au plus 0,3%. L'opacité est obtenue grâce à l'empilage multicouches, c'est-à-dire que les valeurs données ci-avant sont obtenues avec un substrat constitué d'une feuille de verre clair sodo-calcique ordinaire de 4 mm d'épaisseur revêtu de l'empilage multicouches.

Par « revêtement diélectrique transparent », on entend un revêtement diélectrique ayant un coefficient d'extinction k d'au plus 0,2.

Par « couche d'atténuation », aux fins de l'invention, on entend une couche qui absorbe une partie du rayonnement visible et qui consiste essentiellement en une matière dont le coefficient d'extinction spectrale k(λ) est supérieur à zéro sur l'ensemble du domaine des longueurs d'ondes du visible (380-780 nm). Le coefficient d'extinction moyen k de cette matière, pour la gamme visible dont la longueur d'onde va de 350 nm à 750 nm, est d'au moins 0,5, de préférence supérieur à 1,0, avantageusement supérieur à 2 et préférentiellement supérieur à 3. Un exemple de gamme de valeurs préférée est comprise entre 2 et 4, avantageusement entre 3 et 4. Une couche d'atténuation ayant un coefficient d'extinction k aussi faible que 0,5 - 0,7, par exemple, peut convenir, mais, lorsque le coefficient d'extinction est aussi faible, il est préférable que l'indice de réfraction soit supérieur à 2,6 et que l'épaisseur de la couche soit aussi plus élevée que si le coefficient d'extinction était plus élevé pour compenser la faible absorption intrinsèque du matériau. C'est en fait le produit de ces trois paramètres qui doit être suffisant, comme on va le voir ci-après.

Sauf indication contraire, les valeurs des coefficients d'extinction k et des indices de réfraction n données dans la présente description sont des moyennes arithmétiques calculées à partir des valeurs obtenues sur l'étendue du spectre visible pour les longueurs d'onde λ allant de 350 nm à 750 nm, par intervalles réguliers de 3 nm.

De préférence, la couche d'atténuation est constituée d'une matière, et possède une épaisseur, telles que la relation suivante (produit des valeurs k, n et e) soit respectée :
k x n x e > 35, avantageusement > 40, et préférentiellement > 60. dans laquelle k est le coefficient d'extinction moyen tel que défini ci-dessus, n est l'indice de réfraction moyen tel que défini ci-dessus et e est l'épaisseur géométrique de la couche exprimée en nm.

La couche fonctionnelle absorbant la lumière peut être un nitrure par exemple, telle que TiN, CrN ou autre nitrure absorbant, ou du carbone ou un matériau carboné, pour autant qu'elle respecte la condition sur la valeur du coefficient d'extinction k. De préférence, la couche fonctionnelle absorbant la lumière est une couche à caractère métallique.

Par « caractère métallique » on entend une couche formée d'un matériau possédant la caractéristique généralement admise pour définir un métal. Cette couche métallique peut toutefois être légèrement nitrurée, oxydée ou carbonée, sans perdre son caractère métallique de base.

Chaque couche constitutive de l'empilage (la couche fonctionnelle, la couche d'atténuation et les couches diélectriques) peuvent être composées d'un ensemble de couches permettant d'améliorer les propriétés physico-chimiques du produit (durabilité, résistance au traitement thermique à haute température, stabilité optique suite à un processus de trempe, facilité de réalisation, production ...).

La couche fonctionnelle absorbant la lumière et la couche d'atténuation sont déposées par pulvérisation cathodique sous pression réduite, de préférence assistée par champ magnétique (magnétron). L'une ou l'autre ou les deux peuvent éventuellement être formées de plusieurs couches de matériaux différents, par exemple pour améliorer la résistance chimique ou thermique. Les coefficient d'extinction et indice de réfraction à prendre en compte sont alors les moyennes pondérées des matériaux. Par exemple, on peut utiliser la structure suivante, à titre illustratif uniquement, Cr/Ti/Cr, dans laquelle Cr protège Ti de l'oxydation notamment. On peut aussi insérer une fine couche barrière à l'interface entre la couche d'atténuation ou la couche fonctionnelle et le revêtement diélectrique, éventuellement à chaque interface, afin d'assurer une meilleure compatibilité à l'interface et/ou pour protéger les couches métalliques, si tel est le cas, et/ou pour former une barrière à la diffusion d'impuretés indésirables (Na, O, H₂O, N, C, ...). Par exemple, à l'interface entre un métal et Si₃N₄, on peut insérer une fine couche de 5 à 10 nm de Cr₂O₃, Nb₂O₅, Hf₂O₃, Ta₂O₅ ou NiCrOx.

De préférence, le produit du coefficient d'extinction k par l'épaisseur en nm (k x e) de la couche fonctionnelle absorbant la lumière est d'au moins 110, avantageusement 200 et préférentiellement d'au moins 220. On obtient ainsi plus facilement une bonne opacité du panneau.

De préférence, le coefficient d'extinction k de la couche fonctionnelle absorbant la lumière est d'au moins 2,5. Ceci facilite l'obtention d'un opacification efficace pour une épaisseur de couche limitée.

La couche fonctionnelle absorbant la lumière peut par exemple être formée de titane, de chrome, de zirconium, de molybdène, d'argent, d'aluminium, de nickel, de cuivre, de niobium, de tantale, de palladium, d'yttrium, de tungstène, d'hafnium, de vanadium ou de leurs alliages, ainsi que de CoCr, NiCr, ZrCr, NiCrW, NbCr et d'acier inoxydable. Comme indiqué ci-dessus, ces couches peuvent être légèrement nitrurées, oxydées ou carbonées, etc... sans perdre leur caractère métallique.

La couche d'atténuation peut par exemple être formée de titane, de niobium, de chrome, de molybdène, de zirconium, de tantale, de palladium, d'yttrium, de tungstène, d'hafnium, de vanadium ou de leurs alliages, ou d'un nitrure ou oxynitrure absorbant la lumière tel que TiN, TaN, CrN, ou ZrN, ou d'un oxyde absorbant la lumière tel que l'oxyde d'inox ou l'oxyde de fer. De préférence, la couche d'atténuation est une couche à caractère métallique. Cette caractéristique permet d'obtenir une atténuation efficace, sur tout le spectre visible, de la réflexion de la couche fonctionnelle absorbant la lumière pour une faible épaisseur de la couche d'atténuation.

La couche fonctionnelle absorbant la lumière a pour fonction essentielle de réaliser l'opacification du panneau moyennant une épaisseur relativement modérée permettant une fabrication industrielle à moindre coût.

De préférence, l'épaisseur géométrique de la couche fonctionnelle absorbant la lumière est d'au plus 88 nm, de préférence d'au plus 80 nm.

De préférence, la couche fonctionnelle absorbant la lumière a une épaisseur géométrique comprise entre 25 et 88 nm, avantageusement comprise entre 25 et 80 nm, et préférentiellement comprise entre 25 et 75 nm.

De préférence, l'épaisseur géométrique de la couche fonctionnelle absorbant la lumière est égale ou supérieure à 28 nm, avantageusement égale ou supérieure à 31 nm, et préférentiellement égale ou supérieure à 35 nm. Une gamme d'épaisseurs entre 28 et 70 nm pour la couche fonctionnelle absorbant la lumière favorise l'obtention d'un panneau ayant une très faible transmission lumineuse qui est opaque ou quasiment opaque, tout en limitant les coûts de production. De préférence, l'épaisseur géométrique de la couche fonctionnelle absorbant la lumière est comprise entre 31 et 70 nm, avantageusement entre 35 et 60 nm.

De préférence, l'épaisseur géométrique de la couche d'atténuation est égale ou inférieure à 40 nm, avantageusement égale ou inférieure à 30 nm, et préférentiellement égale ou inférieure à 20 nm et plus préférentiellement égale ou inférieure à 16 nm. Une épaisseur comprise entre 2 et 12 nm, avantageusement entre 3 et 10 nm, de la couche d'atténuation est particulièrement bien adaptée pour favoriser l'obtention d'une faible réflexion lumineuse côté substrat pour une épaisseur totale de l'empilage relativement faible.

De préférence, l'épaisseur totale de l'empilage multicouches est d'au plus 400 nm, avantageusement d'au plus 300 nm, et préférentiellement d'au plus 250 nm.

Selon l'invention, la couche d'atténuation est séparée de la couche fonctionnelle absorbant la lumière par au moins un revêtement diélectrique transparent.

Lorsque le revêtement diélectrique transparent disposé adjacent à la couche d'atténuation du côté opposé à la couche fonctionnelle absorbant la lumière est déposé directement sur le substrat en matière vitreuse, c'est-à-dire que l'empilage est destiné par exemple à être en position 2 et que le panneau sera donc vu du côté du substrat, l'indice de réfraction de ce revêtement doit être supérieur à 1,5. Il en est de même si ce revêtement diélectrique est destiné à être en contact avec du PVB comme par exemple dans un vitrage feuilleté. Par contre, si ce revêtement diélectrique est destiné à être en contact avec l'air, par exemple si l'empilage est disposé en position 1 et que le panneau sera donc vu du côté de l'empilage, ce revêtement diélectrique peut alors avoir un indice de réfraction de 1,5 ou très légèrement inférieur. De préférence, le revêtement diélectrique transparent disposé adjacent à la couche d'atténuation du côté opposé à la couche fonctionnelle absorbant la lumière a un indice de réfraction n supérieur à 1,9 et avantageusement égal ou supérieur à 2. Ces modes de réalisation peuvent par exemple être représentées comme dans la Table A, ci-après.

De préférence, l'épaisseur optique du revêtement diélectrique transparent disposé adjacent à la couche d'atténuation du côté opposé à la couche fonctionnelle absorbant la lumière est comprise entre 50 et 140 nm, avantageusement entre 60 et 130 nm, et préférentiellement entre 70 et 120 nm. Ces gammes d'épaisseurs favorisent, tout particulièrement en combinaison avec une couche d'atténuation comprise entre 2 et 12 nm, avantageusement entre 3 et 10 nm, l'obtention d'une très faible réflexion lumineuse observée du côté de la couche d'atténuation. En particulier, on peut obtenir aisément une réflexion lumineuse égale ou inférieure à 6%, et même égale ou inférieure à 5%. Compte tenu, par exemple en ce qui concerne la cas d'une faible réflexion examinée côté substrat, du fait que la réflexion lumineuse d'un substrat formé par une feuille de verre clair ordinaire est d'environ 4%, cela signifie que la réflexion lumineuse n'est presque pas augmentée à cause de l'empilage multicouches, et ceci en tenant compte que l'opacité est de préférence obtenue par une fine couche métallique qui tend à établir un effet « miroir ». Pour rappel, l'épaisseur optique est obtenue en multipliant l'épaisseur géométrique par l'indice de réfraction n du matériau considéré.

De préférence, la couche d'atténuation est entourée, et en contact avec, deux revêtements diélectriques transparents ayant une épaisseur optique similaire qui ne diffère pas de plus de 45 nm, de préférence pas plus de 20 nm. Ceci facilite l'obtention d'une faible réflexion.

De préférence, l'épaisseur géométrique de la couche fonctionnelle absorbant la lumière est comprise entre 25 et 80 nm, avantageusement entre 35 et 80 nm, préférentiellement entre 25 et 70 nm, l'épaisseur géométrique de la couche d'atténuation est comprise entre 1 et 15 nm, et l'épaisseur optique du revêtement diélectrique disposé adjacent à la couche d'atténuation du côté opposé à la couche fonctionnelle absorbant la lumière est comprise entre 40 et 160 nm. Cette combinaison de caractéristiques favorise l'obtention d'une très faible réflexion lumineuse côté substrat avec une teinte neutre.

De préférence, la couche fonctionnelle absorbant la lumière et/ou ladite couche d'atténuation est/sont formée(s) d'un alliage à base de Ni, de Cr, de NiCr ou de Zr. Avantageusement ces deux couches sont à base dudit alliage. Les alliages à base de ces métaux forment des couches fonctionnelles absorbant la lumière et/ou des couches d'atténuation capables de subir des traitements thermiques à haute température sans modification structurelle significative.

De préférence, la couche fonctionnelle absorbant la lumière et/ou ladite couche d'atténuation est/sont à base d'un alliage du groupe NiCr, NiCrW, NbZr ou CrZr, et avantageusement, les deux dites couches sont à base d'un alliage de ce groupe. On peut ainsi obtenir facilement, en choisissant judicieusement les revêtements diélectriques, un panneau qui supporte le traitement thermique à haute température sans modification significative des propriétés optiques de l'ensemble. Ces alliages favorisent aussi l'obtention de l'effet esthétique agréable. De préférence, les couches métalliques absorbant la lumière sont en NiCrW à raison de 40 à 60% en poids de NiCr (Nickel/Chrome ayant la proportion respectivement de 80/20) et 60 à 40% en poids de tungstène dans l'alliage NiCrW.

D'une manière générale, chaque revêtement diélectrique peut comprendre une couche diélectrique transparente habituellement utilisée dans le domaine tel que, pour n'en citer que quelques-unes, TiO₂, Si₃N₄, SiOₓN_{y}, Al(O)N, Al₂O₃, SnO₂, ZnAlOₓ, Zn₂SnO₄, ITO, un oxyde mixte de Ti et de Zr ou de Nb, etc.... Bien entendu, chaque revêtement diélectrique peut comprendre plusieurs couches diélectriques de matériaux différents, dont notamment certaines peuvent être destinées à apporter une fonctionnalité particulière spécifique, comme une protection mécanique et/ou chimique, ou pour augmenter le taux de dépôt, ou pour couper la croissance cristalline. On peut notamment citer une couche diélectrique destinée à s'opposer à la migration d'ions alcalins provenant du verre, par exemple une couche SiO₂, ou une couche finale de protection formée d'un oxyde mixte de titane et de zirconium. L'épaisseur optique du revêtement diélectrique est la somme des épaisseurs optiques de chacune de couches diélectriques qui le constituent.

SiO₂ ne convient pas en tant que seul revêtement diélectrique transparent déposé sur le substrat en matière vitreuse sous une couche d'atténuation car son indice de réfraction est 1,5, ni en tant que revêtement disposé adjacent à la couche d'atténuation du côté opposé à la couche fonctionnelle absorbant la lumière sauf s'il est destiné à être en contact avec de l'air, mais il peut convenir pour tout autre emplacement de revêtement diélectrique transparent.

Le revêtement diélectrique externe disposé en dernière position de l'empilage, donc le plus éloigné du substrat, est essentiellement un revêtement destiné à protéger l'empilage multicouches des différentes agressions externes physiques et/ou chimiques, et notamment à protéger l'empilage lors d'un traitement thermique à haute température si tel est le cas. Toutefois, lorsqu'une couche d'atténuation se trouve du côté du revêtement diélectrique externe disposé en dernière position de l'empilage, ledit revêtement diélectrique externe réalise aussi une fonction interférentielle associée à la couche d'atténuation pour obtenir la faible réflexion lumineuse.

Les couches diélectriques sont généralement déposées par pulvérisation cathodique sous pression réduite assistée par champ magnétique (magnétron), mais elles peuvent aussi être déposées par la technique bien connue appelée PECVD (« Plasma-Enhanced Chemical Vapor Deposition») ou dépôt chimique en phase vapeur assisté par plasma. Chaque revêtement diélectrique peut être formé de plusieurs couches diélectriques de compositions différentes.

Les revêtements diélectriques transparents externes par rapport à l'empilage dans son ensemble, soit le premier revêtement diélectrique transparent déposé sur le substrat et le dernier revêtement diélectrique transparent de l'empilage, et préférentiellement tous les revêtements diélectriques transparents de l'empilage, sont à base de nitrure de silicium ou de nitrure d'aluminium, et avantageusement essentiellement en nitrure de silicium, c'est-à-dire à plus de 90%, voire 95% et même 98%, de nitrure de silicium. Ceci sans exclure la possibilité, comme discuté ci-dessus, de la présence, par exemple, d'une fine couche barrière aux ions alcalins sur le substrat ou d'une fine couche finale de protection, par exemple en oxyde mixte de Ti et de Zr. De manière classique, le nitrure de silicium peut être obtenu à partir d'une cible de silicium, éventuellement dopée à l'aluminium ou au bore, par pulvérisation cathodique, à l'aide d'un magnétron, dans une atmosphère réactive d'azote et d'argon. La cible de silicium est dopée pour lui conférer la conduction électrique nécessaire à la pulvérisation cathodique, par exemple dopée à au plus 10% en poids d'aluminium ou de bore, par exemple entre 2% et 4%. Les couches de nitrure de silicium dans l'empilage fini peuvent être légèrement oxydées sur une partie de leur épaisseur. Ces couches de nitrures de silicium peuvent aussi être plus riches en silicium que la stœchiométrie théorique. Le nitrure de silicium et le nitrure d'aluminium protègent efficacement les couches métalliques de toutes agressions extérieures, et en particulier lors d'un traitement thermique à haute température, par exemple aux environs de 600 à 670°C pendant 6 à 10 minutes, traitement nécessaire pour un traitement de renforcement mécanique du substrat verrier tel un traitement de trempe thermique.

La couche fonctionnelle absorbant la lumière et la couche d'atténuation peuvent être de matières différentes. De préférence, les deux dites couches sont de composition identique.

De préférence, une seconde couche d'atténuation, avantageusement à caractère métallique, ayant une épaisseur comprise entre 1 et 50 nm et ayant un indice de réfraction n supérieur à 1 et un coefficient d'extinction k d'au moins 0,5, et un revêtement diélectrique transparent supplémentaire dont l'épaisseur optique est comprise entre 30 et 160 nm et dont l'indice de réfraction n est supérieur à 1,5, sauf s'il est en contact avec l'air, sont ajoutés de l'autre côté de la couche fonctionnelle absorbant la lumière par rapport à la première couche d'atténuation, de manière à ce que ce revêtement diélectrique transparent supplémentaire soit de l'autre côté de la seconde couche d'atténuation par rapport à la couche fonctionnelle absorbant la lumière. Cette disposition permet d'obtenir un aspect esthétique agréable lorsqu'on observe le panneau des deux côtés, donc aussi bien du côté du substrat que du côté de l'empilage multicouches. Les mêmes préférences en ce qui concerne le matériau et en ce qui concerne les gammes d'épaisseurs que pour la première couche d'atténuation s'appliquent totalement à cette seconde couche d'atténuation. Ce mode de réalisation peut par exemple être représenté comme dans la Table B.

L'invention s'étend à un panneau de verre comprenant un substrat en matière vitreuse portant un empilage multicouches incluant au moins une couche fonctionnelle absorbant la lumière et une couche d'atténuation entourées de revêtements diélectriques transparents, caractérisé en ce qu'il présente une transmission lumineuse égale ou inférieure à 2%, de préférence égale ou inférieure à 1%, une réflexion lumineuse, observée du côté de la couche d'atténuation, égale ou inférieure à 6,5%, de préférence égale ou inférieure à 6%, avantageusement égale ou inférieure à 5,5%, et une teinte neutre en réflexion observée de ce même côté.

Un panneau de verre selon l'invention présente un aspect esthétique nouveau et fort agréable.

De préférence, la réflexion lumineuse côté couche d'atténuation est égale ou inférieure à 5%, avantageusement égale ou inférieure à 4,5%.

La couche fonctionnelle absorbant la lumière et les couches d'atténuation sont déposées par pulvérisation cathodique sous pression réduite, de préférence assistée par champ magnétique (magnétron). Les couches diélectriques sont généralement déposées par pulvérisation cathodique sous pression réduite assistée par champ magnétique (magnétron), mais elles peuvent aussi être déposées par la technique bien connue appelée PECVD (« Plasma-Enhanced Chemical Vapor Déposition ») ou dépôt chimique en phase vapeur assisté par plasma. Chaque revêtement diélectrique peut être formé de plusieurs couches diélectriques de composition différentes.

De préférence, la couche fonctionnelle absorbant la lumière et la couche d'atténuation sont formées d'un alliage à base de Ni, de Cr, de Zr ou de W, et avantageusement à base d'un alliage du groupe NiCr, NiCrW ou CrZr.

Les revêtements diélectriques sont à base de nitrure de silicium ou de nitrure d'aluminium, et avantageusement essentiellement en nitrure de silicium, c'est-à-dire à plus de 90%, voire 95% et même 98%, de nitrure de silicium.

De préférence, les valeurs colorimétriques a^{∗} et b^{∗} observées en réflexion côté couche d'atténuation sont toutes deux inférieures à 4, de préférence égale ou inférieures à 3, avantageusement inférieures à 1, et même à 0,5, en valeur absolue. Cette caractéristique garanti un aspect neutre en réflexion qui, combiné avec une très faible réflexion, fourni un aspect noir particulièrement esthétique.

De préférence, la réflexion lumineuse observée d'au moins un des côtés du panneau est égale ou inférieure à 5,2%, avantageusement égale ou inférieure à 5%. Le panneau présente ainsi également un aspect esthétique agréable d'un côté au moins. De préférence, la réflexion lumineuse observée des deux côtés du panneau est égale ou inférieure à 5,2%, avantageusement égale ou inférieure à 5%.

L'invention s'étend aussi à un panneau feuilleté comprenant une feuille de verre portant un empilage multicouches tel que décrit ci-dessus à laquelle est associée une autre feuille de verre à l'intervention d'une matière thermoplastique adhérente.

### 5. Description de modes préférés de réalisation de l'invention

L'invention sera maintenant décrite, à titre illustratif uniquement, à l'aide des exemples de réalisation suivants.

### Exemples comparatifs C1 à C4 :

Dans le tableau I suivant, les quatre premiers exemples hors invention ne comportent qu'une seule couche métallique et deux revêtements diélectriques transparents, voire un seul pour l'exemple C3. Les propriétés optiques correspondantes sont indiquées dans le tableau I. La transmission lumineuse (TL) en % et la réflexion lumineuse (R_{L}) en % sont mesurée avec l'Illuminant D65, 2° selon la CIE. Les coordonnées colorimétriques L^{∗}, a^{∗}, b^{∗}, CIE, sont mesurées avec l'Illuminant D65, 10°.La réflexion lumineuse R_{LG} et les coordonnées colorimétriques L^{∗}_{RG}, a^{∗}_{RG}, b^{∗}_{RG} sont observées en réflexion du côté du substrat.

L'empilage multicouches indiqué dans le tableau est déposé sur une feuille de verre clair sodo-calcique ordinaire de 4 mm d'épaisseur par pulvérisation cathodique sous pression réduite assistée par champ magnétique dans un dispositif appelé magnétron. La couche métallique NiCrW absorbant la lumière est déposée en atmosphère neutre d'argon à partir d'une cible métallique de l'alliage NiCrW composé de 50% en poids de NiCr (Nickel/Chrome ayant la proportion respectivement de 80/20) et 50% en poids de tungstène. Les couches diélectriques de nitrure Si₃N₄ sont déposées à partir d'une cible métallique de silicium, dopée à raison de 4% d'aluminium, dans une atmosphère réactive d'argon et d'azote. L'appellation Si₃N₄ ne signifie pas que le matériau est parfaitement stœchiométrique, il peut être légèrement sous-nitruré ou légèrement oxydé. Il en est de même avec les autres nitrures. Il en est de même aussi avec les oxydes (SiO₂, TiO₂) qui peuvent être légèrement sous-oxydés ou légèrement nitrurés.

Dans les tableaux, les couches se succèdent à partir du substrat en verre en allant de gauche à droite des tableaux. Les épaisseurs indiquées sont les épaisseurs géométriques en nm.

**Tableau I (exemples comparatifs) :**

| Ex. | Si₃N₄ | NiCrW | Si₃N₄ | T_{L} | R_{L} | L^{∗} | a^{∗} | b^{∗} |
|---|---|---|---|---|---|---|---|---|
| C1 | 62,5 | 4,5 | 6,3 | 41 | 5 | 27,16 | 0,7 | -0,1 |
| C2 | 60 | 3 | 50 | 64 | 12 | 41,96 | 4,7 | -0,3 |
| C3 | - | 50 | 50 | 1,7 | 45 | 73 | 0,2 | 4,8 |
| C4 | 56,7 | 50 | 50 | 2,2 | 25,5 | 57,7 | 3,1 | 0,8 |

Les exemples C1 et C2 présentent une transmission lumineuse beaucoup trop élevée pour le but recherché et sont donc inadaptés. L'exemple C1 permet bien sûr d'obtenir une faible réflexion lumineuse avec une teinte neutre. Toutefois, hormis le fait que la transmission lumineuse est beaucoup trop élevée, le second revêtement diélectrique est aussi beaucoup trop mince pour obtenir un produit durable. La protection mécanique et chimique est insuffisante.

Les exemples C3 et C4 présentent une transmission lumineuse très faible et adéquate pour le but recherché, mais ils présentent une réflexion lumineuse beaucoup trop élevée et sont donc inadaptés.

### Exemples 1 à 24 selon l'invention et exemples comparatifs C5 à C8 :

Dans le tableau II ci-dessous, des exemples selon l'invention sont reproduits avec les mêmes représentations que pour les exemples comparatifs du tableau I. Deux exemples comparatifs C5 à C8 sont aussi représentés et les exemples 8 et 18 ne sont pas couverts par les limites de l'invention Les couches sont déposées dans les mêmes conditions et selon la même technique, par pulvérisation cathodique sous pression réduite assistée par champ magnétique dans un dispositif appelé magnétron. La composition des couches NiCrW est la même que pour les exemples comparatifs. Les couches métalliques Al, Cu, Cr et Ti sont également déposées en atmosphère neutre d'argon à partir d'une cible métallique du matériau correspondant. Les couches de nitrures TiN, CrN, TaN et ZrN sont déposées à partir d'une cible métallique du matériau correspondant dans une atmosphère réactive d'argon et d'azote. Les couches d'oxydes TiO₂ sont déposées à partir d'une cible céramique TiOx, dans une atmosphère réactive d'argon et d'oxygène. Les couches SiO₂ sont déposées à partir d'une cible de silicium dopée à 4% d'aluminium en atmosphère réactive oxydante d'argon et d'oxygène. La couche SiON est déposée dans une atmosphère réactive d'argon et d'azote contenant un peu d'oxygène. La couche AZO est déposée à partir d'une cible céramique d'oxyde de zinc dopée à l'aluminium en atmosphère neutre. L'empilage multicouches est aussi déposé sur une feuille de verre clair sodo-calcique ordinaire de 4 mm d'épaisseur.

Les coefficients d'extinction k et les indices de réfraction n, calculés en moyenne comme indiqué ci-avant sur l'étendue du spectre visible allant de 350 nm à 750 nm, sont donnés dans le tableau III ci-après.

La transmission lumineuse (TL ) en % et la réflexion lumineuse (RL ) en % sont mesurées avec l'Illuminant D65, 2° selon la CIE. Les coordonnées colorimétriques L* , a* , b* , CIE, sont mesurées avec l'Illuminant D65, 10°. La réflexion lumineuse RLG et les coordonnées colorimétriques L* RG a* RG , b* RG sont observées en réflexion du côté du substrat. La réflexion lumineuse RLC et les coordonnées colorimétriques L* RC a* RC , b* RC sont observées en réflexion du côté de l'empilage multicouches. Les exemples 12, 15 et 23 ne font pas partie de l'invention.

**Tableau II (exemples selon l'invention et exemples comparatifs C5 à C8) :**

| Ex. | Si₃N₄ | NiCrW | Si₃N₄ | NiCr^{∗}W | Si₃N₄ | T_{L} | R_{LG} | L^{∗}_{RG} | a^{∗}_{RG} | b^{∗}_{RG} |
|---|---|---|---|---|---|---|---|---|---|---|
| 1 | 56,3 | 7,2 | 50 | 50 | 50 | 0,5 | 4,3 | 24,7 | 0,1 | -0,3 |
| 2 | 43,9 | 9,3 | 47,5 | 36,9 | 30 | 1 | 6 | 29,8 | 3 | 3 |
| 3 | 33,7 | 7,6 | 49,2 | 39,1 | 30 | 1 | 6 | 29,8 | 3 | -3 |
| 4 | 51,6 | 5 | 52,2 | 44 | 32,5 | 1 | 6 | 29,8 | -3 | -3 |
| 5 | 60 | 5,3 | 53,4 | 44,3 | 36,6 | 1 | 6 | 29,8 | -2,8 | 3 |
| 6 | 56,4 | 7,1 | 50,2 | 63,8 | 50 | 0,2 | 4,3 | 24,7 | 0 | -0,3 |

| Ex. | Si₃N₄ | NiCrW | Si₃N₄ | Al | Si₃N₄ | T_{L} | R_{LG} | L*_{RG} | a*_{RG} | b*_{RG} |
|---|---|---|---|---|---|---|---|---|---|---|
| 7 | 58,8 | 8,7 | 52,3 | 34 | 50 | 0,2 | 4,4 | 25 | 0,1 | -0,1 |

| Ex. | Si₃N₄ | NiCrW | Si₃N₄ | Ti | Si₃N₄ | T_{L} | R_{LG} | L*_{RG} | a*_{RG} | b*_{RG} |
|---|---|---|---|---|---|---|---|---|---|---|
| 8 | 56,6 | 6,9 | 42 | 94,1 | 50 | 0,2 | 4,3 | 24,7 | 0 | -0,3 |

| Ex. | Si₃N₄ | Ti | Si₃N₄ | NiCrW | Si₃N₄ | T_{L} | R_{LG} | L*_{RG} | a*_{RG} | b*_{RG} |
|---|---|---|---|---|---|---|---|---|---|---|
| 9 | 49,7 | 14,5 | 60,9 | 64,8 | 50 | 0,2 | 4,4 | 25 | 0,1 | -0,1 |

| Ex. | Si₃N₄ | Al | Si₃N₄ | NiCrW | Si₃N₄ | T_{L} | R_{LG} | L*_{RG} | a*_{RG} | b*_{RG} |
|---|---|---|---|---|---|---|---|---|---|---|
| C5 | 47,9 | 3,4 | 81,9 | 66,8 | 50 | 0,4 | 10,6 | 38,9 | 4,2 | -1,7 |

| Ex. | Si₃N₄ | TiN | Si₃N₄ | NiCrW | Si₃N₄ | T_{L} | R_{LG} | L*_{RG} | a*_{RG} | b*_{RG} |
|---|---|---|---|---|---|---|---|---|---|---|
| 10 | 45 | 29,1 | 37,4 | 64,6 | 50 | 0,2 | 4,9 | 26,4 | 0,4 | -0,2 |

| Ex. | Si₃N₄ | ZrN | Si₃N₄ | NiCrW | Si₃N₄ | T_{L} | R_{LG} | L*_{RG} | a*_{RG} | b*_{RG} |
|---|---|---|---|---|---|---|---|---|---|---|
| 11 | 39,8 | 25 | 0 | 75,5 | 50 | 0,3 | 6 | 29,7 | 0 | -0,5 |

| Ex. | TiO₂ | NiCrW | Si₃N₄ | NiCrW | Si₃N₄ | T_{L} | R_{LG} | L*_{RG} | a*_{RG} | b*_{RG} |
|---|---|---|---|---|---|---|---|---|---|---|
| 12 | 43,6 | 10,4 | 57,8 | 61,5 | 50 | 0,2 | 4,9 | 26,6 | 0,3 | -0,2 |

| Ex. | - | NiCrW | Si₃N₄ | NiCrW | Si₃N₄ | T_{L} | R_{LG} | L*_{RG} | a*_{RG} | b*_{RG} |
|---|---|---|---|---|---|---|---|---|---|---|
| C6 | - | 5,1 | 49,4 | 59,7 | 50 | 0,4 | 6,7 | 31,2 | 5,9 | -0,5 |

| Ex. | SiON | NiCrW | Si₃N₄ | NiCrW | Si₃N₄ | TL | R_{LG} | L*_{RG} | a*_{RG} | b*_{RG} |
|---|---|---|---|---|---|---|---|---|---|---|
| 13 | 69,3 | 4,1 | 51,4 | 67,5 | 50 | 0,2 | 5 | 26,9 | 2,6 | -0,2 |

| Ex. | Si₃N₄ | NiCrW | TiO₂ | NiCrW | Si₃N₄ | T_{L} | R_{LG} | L*_{RG} | a*_{RG} | b*_{RG} |
|---|---|---|---|---|---|---|---|---|---|---|
| 14 | 56,9 | 5,8 | 37,4 | 68,4 | 50 | 0,2 | 4,6 | 25,5 | 0,3 | -0,1 |

| Ex. | TiO₂ | NiCrW | TiO₂ | NiCrW | Si₃N₄ | T_{L} | R_{LG} | L*_{RG} | a*_{RG} | b*_{RG} |
|---|---|---|---|---|---|---|---|---|---|---|
| 15 | 42,2 | 9,9 | 40,5 | 64,4 | 50 | 0,2 | 4,7 | 25,8 | 0,1 | -0,2 |

| Ex. | Si₃N₄ | NiCrW | SiO₂ | NiCrW | Si₃N₄ | T_{L} | R_{LG} | L*_{RG} | a*_{RG} | b*_{RG} |
|---|---|---|---|---|---|---|---|---|---|---|
| 16 | 54,3 | 8,2 | 80,1 | 55,6 | 50 | 0,2 | 4,3 | 24,7 | 0 | -0,4 |

| Ex. | Si₃N₄ | NiCrW | Si₃N₄ | NiCrW | Si₃N₄ | T_{L} | R_{LG}/R_{LC} | L*_{RG} /L*_{RC} | a*_{RG} /a*_{RC} | b*_{RG} /b*_{RC} |
|---|---|---|---|---|---|---|---|---|---|---|
| 17 | 30 | 56,6 | 47,6 | 8,3 | 44,6 | 0,2 | 31,9/ 4 | 63/ 23,8 | 0,3/ 0 | 10,5/ 0,1 |

| Ex. | Si₃N₄ | NiCrW | Si₃N₄ | CrN | Si₃N₄ | T_{L} | R_{LG} | L*_{RG} | a*_{RG} | b*_{RG} |
|---|---|---|---|---|---|---|---|---|---|---|
| 18 | 55,3 | 5,9 | 49,6 | 131,5 | 50 | 0,2 | 4,3 | 24,6 | 0 | -0,5 |

| Ex. | Si₃N₄ | W | Si₃N₄ | NiCrW | Si₃N₄ | T_{L} | R_{LG} | L*_{RG} | a*_{RG} | b*_{RG} |
|---|---|---|---|---|---|---|---|---|---|---|
| 19 | 55,9 | 9 | 39,5 | 64,6 | 50 | 0,2 | 4,3 | 24,8 | 0 | -0,3 |

| Ex. | Si₃N₄ | Cu | Si₃N₄ | NiCrW | Si₃N₄ | T_{L} | R_{LC} | L*_{RG} | a*_{RG} | b*_{RG} |
|---|---|---|---|---|---|---|---|---|---|---|
| C7 | 40,8 | 9,5 | 78,5 | 69,1 | 50 | 0,3 | 13,5 | 43,5 | 11,8 | -5 |

| Ex. | Si₃N₄ | Cr | Si₃N₄ | NiCrW | Si₃N₄ | T_{L} | R_{LG} | L*_{RG} | a*_{RG} | b*_{RG} |
|---|---|---|---|---|---|---|---|---|---|---|
| 20 | 50,1 | 10,1 | 68,4 | 65,5 | 50 | 0,2 | 4,5 | 25,4 | 0 | -0,2 |

| Ex. | Si₃N₄ | CrN | Si₃N₄ | NiCrW | Si₃N₄ | T_{L} | R_{LG} | L*_{RG} | a*_{RG} | b*_{RG} |
|---|---|---|---|---|---|---|---|---|---|---|
| 21 | 46,7 | 15,9 | 27,4 | 65,9 | 50 | 0,2 | 4,3 | 24,7 | 0 | -0,2 |

| Ex. | Si₃N₄ | AZO | Si₃N₄ | NiCrW | Si₃N₄ | T_{L} | R_{LG} | L*_{RG} | a*_{RG} | b*_{RG} |
|---|---|---|---|---|---|---|---|---|---|---|
| C8 | 55,7 | 161 | 126 | 70,7 | 50 | 0,2 | 8,9 | 35,6 | 0,8 | 0,3 |

| Ex. | Si₃N₄ | TaN | Si₃N₄ | NiCrW | Si₃N₄ | T_{L} | R_{LG} | L*_{RG} | a*_{RG} | b*_{RG} |
|---|---|---|---|---|---|---|---|---|---|---|
| 22 | 51 | 7,9 | 9,9 | 77,4 | 50 | 0,2 | 5,3 | 27,6 | 1 | -0,5 |

| Ex. | TiO₂ | NiCrW | Si₃N₄ | NiCrW | Si₃N₄ | T_{L} | R_{LG} | L*_{RG} | a*_{RG} | b*_{RG} |
|---|---|---|---|---|---|---|---|---|---|---|
| 23 | 46,3 | 10,4 | 57,8 | 61,5 | 50 | 0,2 | 4,9 | 26,6 | 0,3 | -0,2 |

| Ex. | SiON | NiCrW | Si₃N₄ | NiCrW | Si₃N₄ | T_{L} | R_{LG} | L*_{RG} | a*_{RG} | b*_{RG} |
|---|---|---|---|---|---|---|---|---|---|---|
| 24 | 69,3 | 4,1 | 51,4 | 67,5 | 50 | 0,2 | 5 | 26,9 | 2,6 | -0,2 |

Sauf pour l'exemple 17, la couche d'atténuation se trouve toujours en troisième colonne du tableau et la couche fonctionnelle absorbant la lumière se trouve en cinquième colonne du tableau. Pour l'exemple 17, ces deux couches ont été inversées : la couche d'atténuation se trouve en cinquième colonne et la couche fonctionnelle absorbant la lumière se trouve en troisième colonne.

On constate qu'avec les exemples selon l'invention, on obtient une transmission lumineuse vraiment très faible, le panneau est quasi opaque, et une réflexion lumineuse observée du côté du substrat très faible également. En effet, en tenant compte de la réflexion lumineuse à la surface externe de la feuille de verre qui est d'environ 4%, cela veut dire que la réflexion lumineuse de l'empilage multicouches est d'au plus 2% et même inférieure à 1% pour la plupart des exemples. De plus, la teinte en réflexion côté substrat est relativement neutre, ce qui donne un aspect noir absorbant très esthétique.

En variantes de l'exemple 1, l'épaisseur de la couche fonctionnelle absorbant la lumière, en cinquième colonne du tableau, a été modifiée à 40 nm et à 65 nm, au lieu de 50 nm, ce qui a donné une transmission lumineuse (TL) respectivement de 1% et de 0,2%, les autres propriétés restant égales.

Dans les exemples comparatifs C5 et C7, les couches d'atténuation sont respectivement en aluminium et en cuivre dont les indices de réfraction sont inférieurs à 1 (soit 0,9). On constate que la réflexion lumineuse côté substrat est supérieure à 10%, ce qui est inadéquat. De plus, la teinte n'est pas neutre et d'un aspect rouge non acceptable.

Dans l'exemple comparatif C6, il n'y a pas de revêtement diélectrique entre le substrat et la couche d'atténuation, ayant un indice de réfraction supérieure à 1,5. On constate que la réflexion lumineuse côté substrat est élevée et que la valeur de a^{∗} est aussi élevée, ce qui n'est pas adéquat car l'aspect esthétique qui en découle n'est pas convenable.

Dans l'exemple comparatif C8, la couche d'atténuation est en AZO dont le coefficient moyen d'extinction k n'est que de 0,2, donc inférieur à 0,5. Malgré une augmentation de l'épaisseur du diélectrique intercalaire entre la couche fonctionnelle absorbant la lumière et la couche d'atténuation, la réflexion lumineuse côté substrat est supérieure à 6,5%. On n'obtient donc pas une faible réflexion lumineuse. En fait, AZO, malgré une très faible absorption, est trop transparent pour convenir en tant que matériau de couche d'atténuation : il forme plutôt une couche diélectrique transparente qui peut être utilisée en tant que telle, comme d'autres couches diélectriques transparentes.

Par contre, on constate qu'avec une couche d'atténuation formée par ZrN qui présente un coefficient d'extinction k supérieur à 0,5 mais encore relativement faible (1,1) on obtient une réflexion lumineuse côté substrat de seulement 5,3.

Les coefficients d'extinction et les indices de réfraction des différents matériaux tels qu'utilisés dans les exemples sont donnés à titre indicatif dans le tableau suivant :

**Tableau III :**

| **Matériau** | **n(350-750 nm)** | **k(350-750 nm)** |
|---|---|---|
| NiCrW | 3,5 | 3,6 |
| SiN | 2,0 | 0,0 |
| Al | 0,9 | 6,1 |
| Ti | 1,9 | 2,6 |
| Cu | 0,9 | 3,2 |
| TiN | 2,1 | 1,4 |
| AZO | 2,7 | 0,2 |
| Cr | 1,8 | 3,6 |
| CrN | 3,1 | 1,8 |
| TaN | 5,2 | 1,1 |
| W | 3,5 | 2,7 |
| ZrN | 3,2 | 0,5 |
| TiO2 | 2,6 | 0,0 |
| SiO2 | 1,5 | 0,0 |

Dans l'exemple 17, les positions respectives par rapport au substrat de la couche fonctionnelle absorbant la lumière et de la couche d'atténuation ont été inversées. On constate dans cet exemple que c'est la réflexion lumineuse côté empilage qui est très faible avec une teinte neutre d'aspect noir. Ce panneau selon l'exemple 17 est destiné à être vu du côté empilage et non plus du côté substrat comme les exemples 1-16. L'empilage est, par exemple, destiné à être positionné en P1 (position 1 en partant de l'observateur), ou en P3 s'il est placé dans un panneau feuilleté ou dans un panneau double avec espace central.

### Exemple 25 selon l'invention :

L'exemple 25 se rapporte à un panneau décoratif destiné à pouvoir être observé des deux côtés, donc aussi bien du côté substrat que du côté empilage multicouches. Dans ce cas, une seconde couche d'atténuation est disposée de l'autre côté de la couche fonctionnelle absorbant la lumière par rapport à la première couche d'atténuation. La structure de l'empilage est donnée dans le tableau IV :

**Tableau IV :**

| Ex. | Si₃N₄ | NiCrW | Si₃N₄ | NiCrW | Si₃N₄ | NiCrW | Si₃N₄ |
|---|---|---|---|---|---|---|---|
| 25 | 56,7 | 7,2 | 50,8 | 43,4 | 44,8 | 8,4 | 48,3 |

La couche fonctionnelle absorbant la lumière est en cinquième colonne et les couches d'atténuation sont en troisième et septième colonnes.

Les propriétés optiques qui en résultent sont données dans le tableau V:

**Tableau V :**

| Ex. | T_{L} | R_{LG} | L*_{RG} | a*_{RG} | b*_{RG} | R_{LC} | L*_{RC} | a*_{RC} | b*_{RC} |
|---|---|---|---|---|---|---|---|---|---|
| 25 | 0,2 | 4,3 | 24,8 | 0 | -0,3 | 4 | 23,7 | 0 | 0 |

On constate que pour l'exemple 25 selon l'invention, on obtient une très faible réflexion lumineuse, ainsi qu'une teinte neutre, aussi bien côté empilage que côté substrat.

Bien entendu, l'invention n'est pas limitée aux exemples de réalisation mentionnés dans la présente description.

### Exemples 26 et 27 nefont pas partie de l'invention:

Comme le montre le tableau VI, dans l'exemple 26 les revêtements diélectriques sont en SnO₂ et les couches d'atténuation en NiCr et dans l'exemple 27 les revêtement diélectriques sont en Zn₂SnO₄ et les couches d'atténuation en NiCr.

**Tableau VI :**

| Ex. | SnO₂ | NiCr | SnO₂ | NiCr | SnO₂ |
|---|---|---|---|---|---|
| 26 | 56,7 | 7,2 | 50,8 | 43,4 | 44,8 |

| Ex. | Zn₂SnO₄ | NiCr | ZSO5 | NiCr | Zn₂SnO₄ |
|---|---|---|---|---|---|
| 27 | 57,8 | 7,4 | 56,8 | 50,0 | 50,0 |

Comme on le voit dans le tableau VII ci-dessous, avec les exemples 26 et 27 selon l'invention aussi, on obtient une transmission lumineuse vraiment très faible, le panneau est quasi opaque, et une réflexion lumineuse observée du côté du substrat très faible également. En effet, en tenant compte de la réflexion lumineuse à la surface externe de la feuille de verre qui est d'environ 4%, cela veut dire que la réflexion lumineuse de l'empilage multicouches est inférieure à 1%. De plus, la teinte en réflexion côté substrat est relativement neutre, ce qui donne un aspect noir absorbant très esthétique.

**Tableau VII :**

| Ex. | T_{L} | R_{LG} | L*_{RG} | a*_{RG} | b*_{RG} | R_{LC} | L*_{RC} | a*_{RC} | b*_{RC} |
|---|---|---|---|---|---|---|---|---|---|
| 26 | 0,7 | 4,8 | 26,1 | -0,3 | -0,3 | 10,1 | 39,0 | 13,3 | -27,8 |

| Ex. | T_{L} | R_{LG} | L*_{RG} | a*_{RG} | b*_{RG} | R_{LC} | L*_{RC} | a*_{RC} | b*_{RC} |
|---|---|---|---|---|---|---|---|---|---|
| 27 | 0,6 | 4,5 | 25,3 | 0,1 | -0,1 | 15,8 | 46,6 | 15,3 | -1,1 |

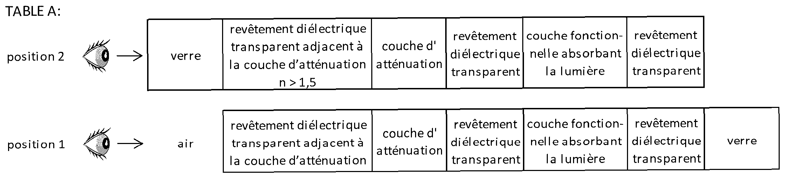

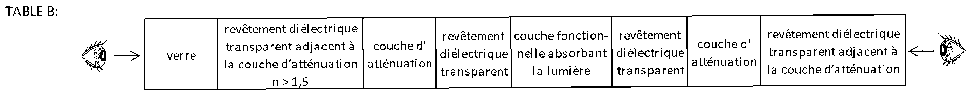

## Revendications

1. Panneau de verre à usage décoratif ayant une transmission lumineuse d'au plus 4% comprenant un substrat en matière vitreuse portant un empilage multicouches incluant
- au moins une couche fonctionnelle absorbant la lumière et des revêtements diélectriques transparents de telle sorte que la couche fonctionnelle absorbant la lumière soit enfermée entre lesdits revêtements diélectriques transparents, ladite au moins une couche fonctionnelle absorbant la lumière ayant une épaisseur géométrique comprise entre 25 et 88 nm, un coefficient d'extinction k d'au moins 1,8 et un produit du coefficient d'extinction k par l'épaisseur en nm d'au moins 91,
- au moins une couche d'atténuation ayant une épaisseur comprise entre 1 et 50 nm et ayant un indice de réfraction n supérieur à 1, un coefficient d'extinction k d'au moins 0,5 et un produit du coefficient d'extinction k par l'indice de réfraction n et par l'épaisseur géométrique exprimée en nm qui soit supérieur à 35, ladite au moins une couche d'atténuation étant séparée de ladite au moins une couche fonctionnelle absorbant la lumière par un revêtement diélectrique transparent et
- un revêtement diélectrique transparent dont l'épaisseur optique est comprise entre 30 et 160 nm est disposé sur la couche d'atténuation du côté opposé à la couche fonctionnelle absorbant la lumière, l'indice de réfraction n dudit revêtement diélectrique transparent est supérieur à 1.5 sauf s'il est en contact avec l'air,
- au moins les revêtements diélectriques transparents externes par rapport à l'empilage dans son ensemble sont à base de nitrure de silicium ou d'aluminium.

2. Panneau décoratif selon la revendication 1, **caractérisé en ce que** la couche fonctionnelle absorbant la lumière est une couche à caractère métallique.

3. Panneau décoratif selon l'une des revendications 1 ou 2, **caractérisé en ce que** la couche d'atténuation est une couche à caractère métallique.

4. Panneau décoratif selon l'une des revendications précédentes, **caractérisé en ce que** l'épaisseur géométrique de la couche fonctionnelle absorbant la lumière est d'au plus 88 nm, de préférence d'au plus 80 nm.

5. Panneau décoratif selon l'une des revendications précédentes, **caractérisé en ce que** l'épaisseur géométrique de la couche fonctionnelle absorbant la lumière est égale ou supérieure à 28 nm, de préférence égale ou supérieure à 31 nm, et avantageusement égale ou supérieure à 35 nm.

6. Panneau décoratif selon l'une des revendications précédentes, **caractérisé en ce que** l'épaisseur géométrique de la couche d'atténuation est égale ou inférieure à 30 nm, de préférence égale ou inférieure à 20 nm, et avantageusement égale ou inférieure à 16 nm.

7. Panneau décoratif selon l'une des revendications précédentes, **caractérisé en ce que** le produit du coefficient d'extinction k par l'indice de réfraction n et par l'épaisseur géométrique, exprimée en nm, de la couche d'atténuation est supérieur à 40 et avantageusement supérieur à 60.

8. Panneau décoratif selon l'une des revendications précédentes, **caractérisé en ce que** l'épaisseur optique dudit revêtement diélectrique disposé sur la couche d'atténuation du côté opposé à la couche fonctionnelle absorbant la lumière est comprise entre 50 et 140 nm, de préférence entre 60 et 130 nm, et avantageusement entre 70 et 120 nm.

9. Panneau décoratif selon l'une des revendications précédentes, **caractérisé en ce que** l'épaisseur géométrique de la couche fonctionnelle absorbant la lumière est comprise entre 25 et 70 nm, **en ce que** l'épaisseur géométrique de la couche d'atténuation est comprise entre 1 et 15 nm, et **en ce que** l'épaisseur optique dudit revêtement diélectrique disposé sur la couche d'atténuation du côté opposé à la couche fonctionnelle absorbant la lumière est comprise entre 40 et 160 nm.

10. Panneau décoratif selon l'une des revendications précédentes, **caractérisé en ce que** la couche fonctionnelle absorbant la lumière et/ou la couche d'atténuation est/sont formée(s) d'un alliage à base de Ni, de Cr, de Zr ou de NiCr.

11. Panneau décoratif selon la revendication 10, **caractérisé en ce que** la couche fonctionnelle absorbant la lumière et/ou ladite couche d'atténuation est/sont à base d'un alliage du groupe NiCr, NiCrW, NbZr ou CrZr.

12. Panneau décoratif selon l'une des revendications précédentes, **caractérisé en ce qu'**une seconde couche d'atténuation, ayant une épaisseur comprise entre 1 et 50 nm et ayant un indice de réfraction n supérieur à 1 et un coefficient d'extinction k d'au moins 0,5, et un revêtement diélectrique transparent supplémentaire dont l'épaisseur optique est comprise entre 30 et 160 nm et dont l'indice de réfraction n est supérieur à 1,5, sauf s'il est en contact avec l'air, sont ajoutés de l'autre côté de la couche fonctionnelle absorbant la lumière par rapport à la première couche d'atténuation, de manière à ce que ce revêtement diélectrique transparent supplémentaire soit de l'autre côté de la seconde couche d'atténuation par rapport à la couche fonctionnelle absorbant la lumière.

13. Panneau feuilleté comprenant un panneau décoratif selon l'une des revendications 1 à 12, auquel est associée une autre feuille de verre à l'intervention d'une matière thermoplastique adhérente.

## Patentansprüche

1. Glasscheibe für dekorative Zwecke mit einer Lichtdurchlässigkeit von höchstens 4 %, die ein Substrat aus einem Glasmaterial umfasst, das einen mehrlagigen Stapel trägt, der Folgendes umfasst:
- mindestens eine lichtabsorbierende funktionelle Schicht und transparente dielektrische Beschichtungen so, dass die lichtabsorbierende funktionelle Schicht zwischen den transparenten dielektrischen Beschichtungen eingeschlossen ist, wobei die mindestens eine lichtabsorbierende funktionelle Schicht eine geometrische Dicke zwischen 25 und 88 nm, einen Extinktionskoeffizienten k von mindestens 1,8 und ein Produkt aus dem Extinktionskoeffizienten k und der Dicke in nm von mindestens 91 aufweist,
- mindestens eine Dämpfungsschicht mit einer Dicke zwischen 1 und 50 nm und mit einem Brechungsindex n größer 1, einem Extinktionskoeffizienten k von mindestens 0,5 und einem Produkt aus dem Extinktionskoeffizienten k und dem Brechungsindex n und der in nm ausgedrückten geometrischen Dicke von mehr als 35, wobei die mindestens eine Dämpfungsschicht von der mindestens einen lichtabsorbierenden funktionellen Schicht durch eine transparente dielektrische Beschichtung getrennt ist, und
- eine transparente dielektrische Beschichtung, deren optische Dicke zwischen 30 und 160 nm beträgt, die auf der Dämpfungsschicht auf der Seite angeordnet ist, die der lichtabsorbierenden funktionellen Schicht gegenüberliegt, wobei der Brechungsindex n der transparenten dielektrischen Beschichtung mehr als 1,5 beträgt, außer wenn sie sich in Kontakt mit Luft befindet,
- zumindest die in Bezug auf den Stapel in seiner Gesamtheit äußeren transparenten dielektrischen Beschichtungen auf Silicium- oder Aluminiumnitrid basieren.

2. Dekorative Scheibe nach Anspruch 1, **dadurch gekennzeichnet, dass** es sich bei der lichtabsorbierenden funktionellen Schicht um eine Schicht von metallischem Charakter handelt.

3. Dekorative Scheibe nach einem der Ansprüche 1 oder 2, **dadurch gekennzeichnet, dass** es sich bei der Dämpfungsschicht um eine Schicht von metallischem Charakter handelt.

4. Dekorative Scheibe nach einem der vorhergehenden Ansprüche, **dadurch gekennzeichnet, dass** die geometrische Dicke der lichtabsorbierenden funktionellen Schicht höchstens 88 nm, vorzugsweise höchstens 80 nm beträgt.

5. Dekorative Scheibe nach einem der vorhergehenden Ansprüche, **dadurch gekennzeichnet, dass** die geometrische Dicke der lichtabsorbierenden funktionellen Schicht gleich oder größer als 28 nm, vorzugsweise gleich oder größer als 31 nm und vorteilhafterweise gleich oder größer als 35 nm ist.

6. Dekorative Scheibe nach einem der vorhergehenden Ansprüche, **dadurch gekennzeichnet, dass** die geometrische Dicke der Dämpfungsschicht gleich oder kleiner als 30 nm, vorzugsweise gleich oder kleiner als 20 nm und vorteilhafterweise gleich oder kleiner als 16 nm ist.

7. Dekorative Scheibe nach einem der vorhergehenden Ansprüche, **dadurch gekennzeichnet, dass** das Produkt aus dem Extinktionskoeffizienten k mit dem Brechungsindex n und mit der in nm ausgedrückten geometrischen Dicke der Dämpfungsschicht größer als 40 und vorteilhafterweise größer als 60 ist.

8. Dekorative Scheibe nach einem der vorhergehenden Ansprüche, **dadurch gekennzeichnet, dass** die optische Dicke der dielektrischen Beschichtung, die auf der Dämpfungsschicht auf der Seite angeordnet ist, die der lichtabsorbierenden funktionellen Schicht gegenüberliegt, zwischen 50 und 140 nm, vorzugsweise zwischen 60 und 130 nm und vorteilhafterweise zwischen 70 und 120 nm beträgt.

9. Dekorative Scheibe nach einem der vorhergehenden Ansprüche, **dadurch gekennzeichnet, dass** die geometrische Dicke der lichtabsorbierenden funktionellen Schicht zwischen 25 und 70 nm beträgt, und dadurch, dass die geometrische Dicke der Dämpfungsschicht zwischen 1 und 15 nm beträgt, und dadurch, dass die optische Dicke der dielektrischen Beschichtung, die auf der Dämpfungsschicht auf der Seite angeordnet ist, die der lichtabsorbierenden funktionellen Schicht gegenüberliegt, zwischen 40 und 160 nm beträgt.

10. Dekorative Scheibe nach einem der vorhergehenden Ansprüche, **dadurch gekennzeichnet, dass** die lichtabsorbierende funktionelle Schicht und/oder die Dämpfungsschicht aus einer Legierung auf der Basis von Ni, Cr, Zr oder NiCr bestehen.

11. Dekorative Scheibe nach Anspruch 10, **dadurch gekennzeichnet, dass** die lichtabsorbierende funktionelle Schicht und/oder die Dämpfungsschicht auf einer Legierung der Gruppe NiCr, NiCrW, NbZr oder CrZr basieren.

12. Dekorative Scheibe nach einem der vorhergehenden Ansprüche, **dadurch gekennzeichnet, dass** eine zweite Dämpfungsschicht mit einer Dicke zwischen 1 und 50 nm und mit einem Brechungsindex n von mehr als 1 und einem Extinktionskoeffizienten k von mindestens 0,5 und eine zusätzliche transparente dielektrische Beschichtung mit einer optischen Dicke zwischen 30 und 160 nm und mit einem Brechungsindex n von mehr als 1,5, außer wenn sie sich in Kontakt mit Luft befindet, auf der anderen Seite der lichtabsorbierenden funktionellen Schicht in Bezug auf die erste Dämpfungsschicht so hinzugefügt werden, das diese zusätzliche transparente dielektrische Beschichtung sich auf der anderen Seite der zweiten Dämpfungsschicht in Bezug auf die lichtabsorbierende funktionelle Schicht befindet.

13. Verbundscheibe, die eine dekorative Scheibe nach einem der Ansprüche 1 bis 12 umfasst, mit der eine weitere Glasscheibe mittels eines klebfähigen Thermoplasten verbunden ist.

## Claims

1. Glass panel for decorative use having a light transmission of at most 4%, comprising a substrate made of vitreous material bearing a multilayer stack including
- at least one light-absorbent functional layer and transparent dielectric coatings such that the light-absorbent functional layer is enclosed between said transparent dielectric coatings, said at least one light-absorbent functional layer having a geometric thickness comprised between 25 and 88 nm, an attenuation coefficient k of at least 1.8 and a product of the attenuation coefficient k by the thickness in nm of at least 91,
- at least one attenuating layer having a thickness comprised between 1 and 50 nm and having a refractive index n higher than 1, an attenuation coefficient k of at least 0.5 and a product of the attenuation coefficient k by the refractive index n and by the geometric thickness expressed in nm that is higher than 35, said at least one attenuating layer being separated from said at least one light-absorbent functional layer by a transparent dielectric coating, and
- a transparent dielectric coating the optical thickness of which is comprised between 30 and 160 nm is placed on the attenuating layer on the side opposite the light-absorbent functional layer, the refractive index n of said transparent dielectric coating being higher than 1.5 unless it makes contact with air,
- at least the transparent dielectric coatings that are external with respect to the stack in its entirety being based on aluminium or silicon nitride.

2. Decorative panel according to Claim 1, **characterized in that** the light-absorbent functional layer is a layer of metallic character.

3. Decorative panel according to one of Claims 1 and 2, **characterized in that** the attenuating layer is a layer of metallic character.

4. Decorative panel according to one of the preceding claims, **characterized in that** the geometric thickness of the light-absorbent functional layer is at most 88 nm and preferably at most 80 nm.

5. Decorative panel according to one of the preceding claims, **characterized in that** the geometric thickness of the light-absorbent functional layer is 28 nm or more, preferably 31 nm or more and advantageously 35 nm or more.

6. Decorative panel according to one of the preceding claims, **characterized in that** the geometric thickness of the attenuating layer is 30 nm or less, preferably 20 nm or less and advantageously 16 nm or less.

7. Decorative panel according to one of the preceding claims, **characterized in that** the product of the attenuation coefficient k and the refractive index n and the geometric thickness, expressed in nm, of the attenuating layer is higher than 40 and advantageously higher than 60.

8. Decorative panel according to one of the preceding claims, **characterized in that** the optical thickness of said dielectric coating placed on the attenuating layer on the side opposite the light-absorbent functional layer is comprised between 50 and 140 nm, preferably between 60 and 130 nm, and advantageously between 70 and 120 nm.

9. Decorative panel according to one of the preceding claims, **characterized in that** the geometric thickness of the light-absorbent functional layer is comprised between 25 and 70 nm, **in that** the geometric thickness of the attenuating layer is comprised between 1 and 15 nm, and **in that** the optical thickness of said dielectric coating placed on the attenuating layer on the side opposite the light-absorbent functional layer is comprised between 40 and 160 nm.

10. Decorative panel according to one of the preceding claims, **characterized in that** the light-absorbent functional layer and/or the attenuating layer is/are formed from an alloy based on Ni, Cr, Zr or NiCr.

11. Decorative panel according to Claim 10, **characterized in that** the light-absorbent functional layer and/or said attenuating layer is/are based on an alloy from the group NiCr, NiCrW, NbZr and CrZr.

12. Decorative panel according to one of the preceding claims, **characterized in that** a second attenuating layer, having a thickness comprised between 1 and 50 nm and having a refractive index n higher than 1 and an attenuation coefficient k of at least 0.5, and an additional transparent dielectric coating the optical thickness of which is comprised between 30 and 160 nm and the refractive index n of which is higher than 1.5, unless it makes contact with air, are added on the other side of the light-absorbent functional layer with respect to the first attenuating layer, so that this additional transparent dielectric coating is on the other side of the second attenuating layer with respect to the light-absorbent functional layer.

13. Laminated panel comprising a decorative panel according to one of Claims 1 to 12, with which another glass sheet is associated by way of an adhesive thermoplastic.
